# EUROPEAN PATENT APPLICATION

(11) **EP 3 594 125 A1**
(43) Date of publication of application: **15.01.2020**
(21) Application number: 19179252.2
(22) Date of filing: 10.06.2019
(51) Int. Cl.: B64D 27/02, B64D 27/24, F01D 15/10, F02C 6/00, F02C 6/14, F02K 3/06

(54) **HYBRID ELECTRIC AIRCRAFT**

(30) Priority: 10.07.2018 GB 201811294
(71) Applicant: Rolls-Royce plc, London SW1E 6AT (GB)
(72) Inventor: Chung, Jae-Hoon, Derby, Derbyshire DE24 8BJ (GB); Raffaelli, Lorenzo, Derby, Derbyshire DE24 8BJ (GB)
(74) Representative: Rolls-Royce plc

(57) **Abstract**

An aircraft propulsion system. The system comprises an internal combustion engine (6, 106) configured to drive a first propulsor (4, 110) and an electric generator (15, 115). The system further comprises an electric motor or motors (15, 115, 120) each configured to be powered by electric power provided by the generator (15, 115), and configured to drive the first propulsor (5, 110) and / or a second propulsor (121). An electrical energy storage unit (9, 109) is provided, and is configured to store electrical energy supplied from the generator (15, 115) and supply electrical power to the electric motor (15, 115, 120). At maximum take-off power, the electric motor (15, 115, 120) provides between 5% and 20% of total maximum aircraft propulsive take-off power.

## Description

The present disclosure concerns a hybrid aircraft propulsion system, and an aircraft comprising the propulsion system.

Traditionally, aircraft have been propelled by one or more propulsors such as fans or propellers driven by internal combustion engines such as gas turbine engines or piston engines. Conventionally, the propulsor is driven by a direct drive shaft, or a reduction gearbox.

Recently, it has been proposed to provide an electric motor to drive the propulsor, with power for the electric motor being provided by a generator driven by the internal combustion system. Such a system is known as a "hybrid electric propulsion system". A battery or other power storage unit may also be provided to store excess power generated by the internal combustion engine driven generator, and to provide additional electrical power for high load cases.

The present disclosure relates to such a hybrid electric propulsion system.

According to a first aspect there is provided an aircraft propulsion system comprising:
an internal combustion engine configured to drive a first propulsor and an electric generator;
an electric motor configured to be powered by electric power provided by the generator, and configured to drive the first propulsor and / or a second propulsor; an electrical energy storage unit configured to store electrical energy supplied from the generator and supply electrical power to the electric motor;
wherein, at maximum take-off power, the electric motor provides between 5% and 20% of total maximum aircraft propulsive take-off power.

It has been found that a hybrid aircraft in which the electric motor provides between 5% and 20% of total maximum aircraft take-off power allows for "squared cycle" operation of the aircraft, i.e. operation with fewer peaks and troughs in internal combustion engine power. In other words, the excess energy generating capacity of the internal combustion engine / generator combination at some parts of the flight cycle can be stored, with a deficit in power from the internal combustion engine being made up for from the stored energy at other parts of the flight cycle. Consequently, the internal combustion engine can be operated at high power (and therefore high efficiency) through the flight cycle, while total system weight is minimised.

The internal combustion engine may comprise a gas turbine engine comprising a compressor, combustor and turbine in fluid flow series.

The gas turbine may comprise a turbine entry temperature of between 1600K and 1900K.

The gas turbine engine may comprise a maximum overall pressure ratio of between 10 and 60.

The first propulsor may be configured to provide a first bypass airstream and a core airstream which flows into the compressor. A ratio of the mass flow of the bypass airstream to the core airstream may be between 10 and 18.

The first propulsor may be coupled to the turbine, and may be coupled to the turbine by a reduction gearbox.

The electrical energy storage unit may comprise a chemical battery. The chemical battery may have an energy density of between 500 and 1000 Watt hours per kilogram.

The electrical motor may comprise a torque density of between 10 and 18 Newton metres per kilogram.

The electrical generator may comprise a torque density of between 10 and 18 Newton metres per kilogram.

According to a second aspect of the present invention there is provided an aircraft comprising a propulsion system in accordance with any of the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is view from above of a first aircraft comprising a propulsion system;
**Figure 2** is a schematic drawing of a first propulsion system for the aircraft of figure 1;
**Figure 3** is a view from above of a second aircraft comprising a second propulsion system;
**Figure 4** is a schematic drawing of the second propulsion system for the aircraft of figure 2;
**Figure 5** is a view from above of a third aircraft comprising a third propulsion system; and
**Figure 6** is a schematic drawing of the third propulsion system for the aircraft of figure 5.

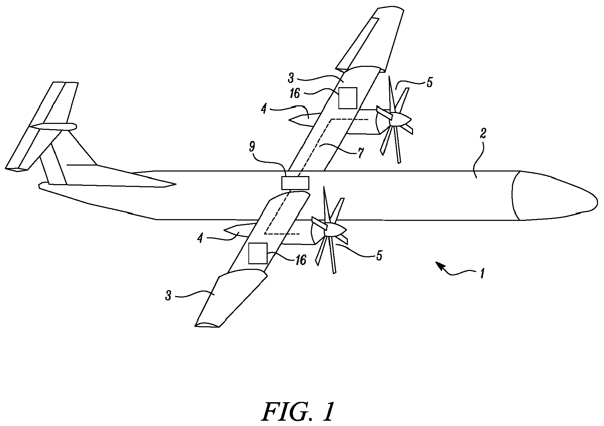

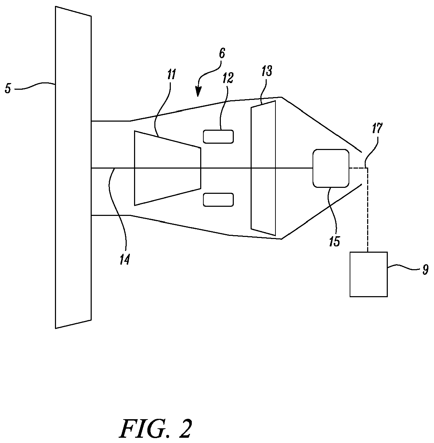

With reference to figures 1 and 2, an aircraft 1 is shown. The aircraft 1 comprises a fuselage 2, wings 3, and a propulsion system comprising a pair of first propulsors 4.

Each propulsor 4 comprises a propeller 5 which is, at least in part, driven by an electrical machine 15 which can be operated as either a motor or a generator. The electrical machine 15 could be of any suitable type, such as permanent magnet direct current (DC), and alternating current (AC) brushless, and is configured to be operable as either an electric generator or as a motor.

An electrical power storage unit in the form of a battery 9 is electrically coupled to both the electric motor / generators 15 via interconnectors 7. The interconnectors 7 may carry either DC or AC current.

When acting as a generator, the electrical machine 9 is driven by an internal combustion engine in the form of a gas turbine engine 6. Each gas turbine engine 6 comprises a compressor 11, combustor 12 and turbine 13 in flow series. The compressor 11 and turbine 13 rotate about a mutual axis, and are coupled by an interconnecting shaft 14, which is also coupled to the electrical machine 15, to thereby drive the generator 15. The gas turbine engine 6 is supplied with fuel (in this case in the form of liquid hydrocarbon fuel) from a fuel storage system comprising one or more fuel tanks 16.

The propulsion system may be operated in the following manner. Air is provided to the gas turbine engine through an intake (not shown). This air is compressed by the compressor 11, combusted with fuel in the combustor 12 to produce hot combustion gasses, and expanded in the turbine 13 to rotate the shaft 14, compressor 11, and generator 15.

Rotation of the generator 15 produces electrical power. This electrical power is stored in the batteries 9. Power electronics devices such as rectifiers and / or inverters may be provided between the various components. For example, where the generators 15 produce AC power when operated as a generator, and require AC power when operated as a motor, a rectifier (not shown) may be provided between the generator 15 and battery 9 to convert the AC power to DC power to charge the battery. Similarly, an inverter may be provided between the battery 9 and motors 15 to convert the DC power provided by the battery 9 to the AC power required by the motors 15.

Depending on thrust requirements and gas turbine engine performance, during at least some stages of operation, excess electrical power generated by the generator 15 is provided to the battery 9, which stores energy for later use. This electrical power can then be provided to the electrical machine 15 when operated as a motor, where the shaft power generated by the gas turbine engine 5 is insufficient to provide the required thrust.

In prior, conventional aircraft, the gas turbine engine must be throttled (i.e. engine fuel flow, air flow and / or temperatures) must be varied in order to control thrust. Typically, thrust requirements are high during take-off and climb, and low during descent and landing. High power may also be required for a rejected landing ("go-around manoeuvre") and for reverse thrust on landing. However, in the system of the present disclosure, excess electrical power can be stored and drawn from the battery 9. This electrical power can then be used for parts of the flight cycle where there is a power deficit from the gas turbine engine 4. Consequently, the engine 4 can be operated at a relatively constant power level throughout the flight, from takeoff to landing. In practice, the engine may not run at a constant power, but rather the engine may run at closer to constant power than in a conventional aircraft. For example, the minimum power level during flight may be increased compared to conventional aircraft, and / or the maximum power level may be reduced, so that the minimum and maximum power levels are closer than in a conventional aircraft. Consequently, the aircraft may be more efficient than prior aircraft.

The inventors have modelled a number of aircraft, to determine aircraft configurations which result in a net reduction in aircraft fuel consumption.

In a first modelled aircraft, shown in figures 1 and 2, an aircraft 1 was modelled having a maximum range of 1000 nautical miles (nm). That is to say, the range of the aircraft where the aircraft is loaded with a maximum fuel load (with the tanks 16 filled to their nominal capacity with fuel and the batteries 9 fully charged), and the aircraft filled with passengers and cargo until it reaches its maximum takeoff weight. In the model, several system level assumptions were made.

The battery is assumed to have an energy density (that is, the amount of energy stored in the battery at full charge divided by its weight) of between 500 and 1000 Watt hours per kilogram (Wh/kg), and preferably approximately 750 Wh/kg. The battery is assumed to have an efficiency (i.e. the electrical energy input to the battery during charging from empty to a full charge, divided by the energy extracted from the battery when discharging from a full charge to empty) of between 90 and 98%, and preferable of approximately 95%.

The electrical machine 15 is assumed to have a torque density (i.e. the torque generated by the electrical machine when operated as a motor at full rated sustained power, or the torque absorbed by the machine when operated as a generator at full rated sustained generating capacity, divided by the weight of the motor) of between 10 and 18 Newton metres per kilogram (NM/kg), and preferably approximately 12 Nm/kg. Similarly, the electrical machine 15 has an efficiency (i.e. the electrical energy output of the electrical machine divided by the mechanical input to the electrical machine when operating as a generator, or the electrical energy input to the machine divided by the mechanical energy output when operated as an electrical motor of between 93 and 98%, and preferably approximately 98%.

Similar, assumptions relating to the gas turbine engine were input to the model. In the model, the gas turbine engine 5 has a turbine inlet temperature (TET),i.e. the temperature of gas flowing into the inlet of the high pressure turbine from the combustor, of between 1600 and 1900 Kelvin (K). The Overall Pressure Ratio (OPR) at maximum climb rate (MCL), i.e. the pressure at the outlet of the compressor divided by the pressure at the inlet of the compressor of between 30:1 and 60:1.

The model also took into account the aircraft architecture. As shown, the aircraft 1 has a distinct fuselage 2 and wings 3 (known as a "tube and wing" configuration), along with a conventional tail. The aircraft 1 is configured to carry passengers, and is sized to accommodate between 100 and 150 passengers.

It has been found that overall fuel savings of between 5 and 9% can be achieved relative to a conventional, non-electric tube and wing aircraft having the same gas turbine engine performance parameters as above. However, it has been found that the power provided by the electrical system at take-off relative to the total take-off power is crucial to achieving this saving.

The inventors have found that, by sizing the electric machines 15 such that, when operated at motors, the combined motors 15 of the aircraft are capable of providing more than 5% and less than 20% of the total maximum take-off power (i.e. the total power provided by both the gas turbine engine and the motors 15 when powered by the batteries 9) these savings can be achieved. The batteries 9 will also generally have to be sized to be capable of providing this power, but may be capable of providing more power, since batteries may in some cases be limited by capacity rather than power rating. In other words, the motors 15 have a maximum sustained power rating (i.e. the amount of power in Watts that the electric motor can generate when operated at maximum sustained power) that is between 5% and 20% of the total power generated by the motors 15 and gas turbine engine 6 combined (again, in terms of Watts). The power generated by the gas turbine engine 6 will be understood to be the net power output by the gas turbine engine, i.e. the power available to power the propeller 5 once other power needs (such as the compressor 11 load and engine ancillary loads) are subtracted.

In one example, to achieve the design range, each gas turbine engine 6 has a maximum rated net power output of 0.4 megawatts (MW) at maximum flat rated sea level take-off power, once ancillary loads and compressor loads have been subtracted. Each electric motor has a maximum rated continuous power output of 0.1 MW. Since there are two electric motors 15 and two gas turbine engines 6, the total aircraft take-off power output is 1 MW (i.e. 0.4 plus 0.1 MW multiplied by two). Consequently, in this example, the electric motors account for 20% of maximum take-off power output. The power output provided by the motors must be provided by the batteries 9, and so the batteries (and power electronics where present) must be rated for a power output rating of at least 0.204 MW (assuming the motors are 98% energy efficient).

It has been found from the model that an overall fuel consumption reduction can be met where such assumptions are made. For example, where the combined motors 15 of the aircraft 1 are capable of providing more than 5% and less than 20% of the total maximum take-off power, a fuel saving of between 5 and 9% can be achieved. This is due to several effects. Firstly, a weight reduction can be achieved, since the peak power necessary (typically at takeoff) can be supplied in part from the batteries and electric motor (which have a very high power density), and so the engine core size can be reduced. This reduction in engine core size results in the engine operating at full power or close to full power for a greater time period. Since internal combustion engine efficiency (and particularly gas turbine engine efficiency) typically reduces with power setting, this results in higher thermal efficiency during the climb and cruise phases, which account for a majority of the aircraft's flight cycle. The gas turbine engines can also be turned off for descent and taxi, with the electrically powered propellers 5 being used for this phase of flight.

It has been found through modelling that, where a lower percentage of electric power is used for propulsive thrust than the above, the weight of the components of the electrical system (generator, power electronics, electrical interconnectors, cooling etc.) outweighs any benefits in core size reduction, and so results in an overall increase in fuel consumption. On the other hand, where a higher percentage of electric power is used for propulsive thrust than the above, the larger weight of the electrical components in view of their low energy density compared to jet fuel leads to higher aircraft weights, and so overall increases in aircraft fuel burn. However, changing the above assumptions with regard to the weight of the components may still result in optimum relative powers being as described above. This is because the difference between the take-off power required and the cruise power required in the modelled electric aircraft is typically between 5 and 20%. Consequently, the internal combustion engines can be undersized by this amount, without requiring power to be supplied from the batteries throughout cruise, thereby minimising the weight of the required batteries. The batteries can then be charged during descent, providing enough power again for a go-around. Consequently, it has been found that the optimal electric power required to provide a square cycle is relatively independent of range and battery power density. Consequently, the applicant has derived a narrow range of electric and internal combustion engine power ratings for hybrid aircraft which provides for significant advantages for a wide range of aircraft types and component technologies.

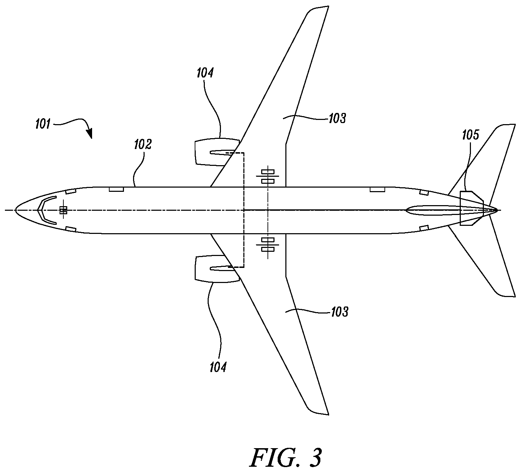

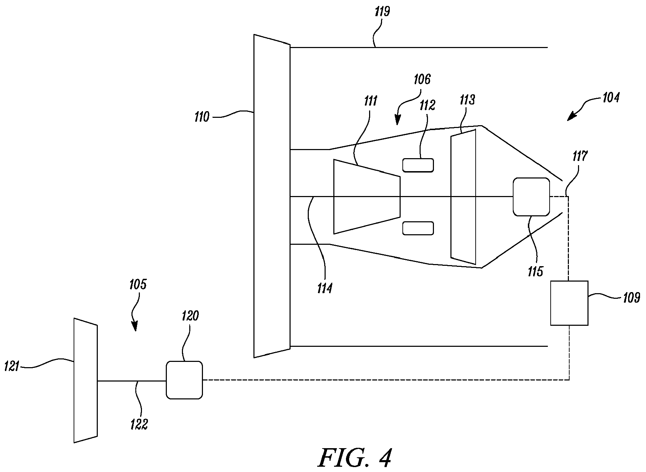

Referring to figures 3 and 4, a second aircraft 101 is shown. The aircraft 101 again comprises a fuselage 102, wings 103 and first and second propulsors 104, 105.

The propulsors 105 include an internal combustion engine in the form of a gas turbine engine 106. The gas turbine engine 106 again comprises a compressor 111, combustor 112 and turbine 113, which powers an electric machine 115 via a shaft 114. The shaft 114 is also coupled to a ducted fan 110, which provides propulsive power.

In this embodiment, the electric machine 115 is coupled to a battery 109 and also to a further electrical machine in the form of a motor 120 via an electrical interconnector 117. The motor 120 forms part of the second propulsor 105, which also comprises a second duct fan 121 coupled to the second motor 120 by a second shaft 122.

This aircraft 101 was also modelled using the same assumptions as for the first aircraft 1 in terms of electrical machine torque density and efficiency (for both electrical machines 115, 120), battery energy density, and gas turbine engine parameters (namely TET and pressure ratio). The engine 106 comprises a bypass duct 119, which defines a bypass ratio at cruise flight conditions (i.e. the mass flow entering the bypass duct 119 divided by the mass flow entering the compressor 11), which is assumed to be between 10 and 11 and is preferably approximately 14. However, the aircraft architecture is different (having separate generators 115 and electric motors 120, though it will be understood that the generator 115 could also be operated as an electric motor if required). The aircraft is also designed for a different size and range, being designed to carry between 150 and 200 passengers up to 3,500 nautical miles, with sufficient additional range to divert. The aircraft is designed for a maximum cruise altitude of 35,000 feet, and a cruise Mach number of 0.78.

Again, the motor 116 of the aircraft 101 is capable of providing more than 5% and less than 20% of the total maximum take-off power. It has been found that an optimum value of motor power as a proportion of total power for the aircraft 101 in order to provide the largest reduction in fuel burn is approximately 10%.

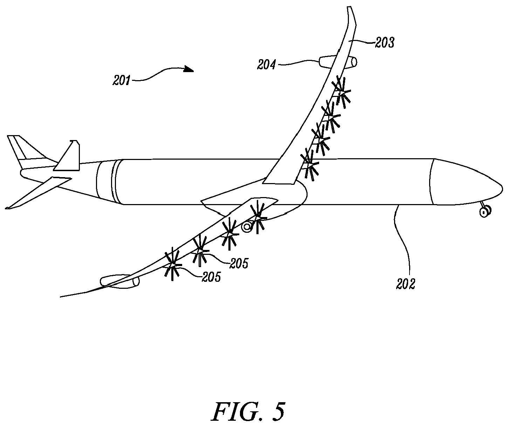

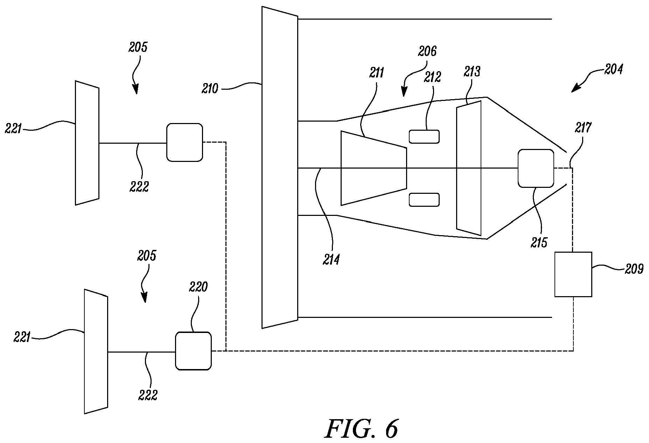

Referring to figures 5 and 6, a third aircraft 201 is shown. The aircraft 201 again comprises a fuselage 202, wings 203 and first and second propulsors 204, 205.

The propulsors 205 include an internal combustion engine in the form of a gas turbine engine 206. The gas turbine engine 206 again comprises a compressor 111, combustor 112 and turbine 113, which powers an electric machine 115 via a shaft 114. The shaft 114 is also coupled to a ducted fan 210 provided within a nacelle 219, which provides propulsive power.

In this embodiment, the electric machine 115 is coupled to a battery 109 and also to a plurality of further electrical machines in the form of motors 120 via an electrical interconnector 117. Each motor 120 forms part of a respective second propulsor 205, each of which also comprises a second ducted fan 121 coupled to the second motor 120 by a second shaft 122.

The second propulsors are distributed about the aircraft 202, in particular ahead of the wings 203 in this embodiment. In other embodiments, the second propulsors 203 could be provided in different positions, such at the rear of the aircraft 201.

This aircraft 201 was also modelled using the same assumptions as for the first and second aircraft 1, 101 in terms of electrical machine torque density and efficiency (for each electrical machine 215, 220), battery energy density, and gas turbine engine parameters (namely TET and pressure ratio). However, the aircraft architecture is different (having separate generators 215 and a plurality of electric motors 220 coupled to each generator 215, though it will be understood that the generator 215 could also be operated as an electric motor if required). The aircraft 201 is also designed for approximately the same size and range as the first aircraft 1.

Again, the motor 116 of the aircraft 101 is capable of providing more than 5% and less than 20% of the total maximum take-off power. It has been found that an optimum value of motor power as a proportion of total power for the aircraft 101 in order to provide the largest reduction in fuel burn is approximately 20%.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An aircraft propulsion system comprising:
an internal combustion engine (6, 106) configured to drive a first propulsor (4, 110) and an electric generator (15, 115);
an electric motor (15, 115, 120), configured to be powered by electric power provided by the generator (15, 115), and configured to drive the first propulsor (5, 110) and / or a second propulsor (121);
an electrical energy storage unit (9, 109) configured to store electrical energy supplied from the generator (15, 115) and supply electrical power to the electric motor (15, 115, 120);
wherein, at maximum take-off power, the electric motor (15, 115, 120) provides between 5% and 20% of total maximum aircraft propulsive take-off power.

2. A system according to claim 1, wherein the internal combustion engine (6, 106) comprises a gas turbine engine (6, 106) comprising a compressor (11, 111), combustor (12, 112) and turbine (13, 113) in fluid flow series.

3. A system according to claim 2, wherein the gas turbine engine (6, 106) comprises a maximum overall pressure ratio of between 10 and 60.

4. A system according to claim 2 or claim 3, wherein the first propulsor (5, 110) is configured to provide a first bypass airstream and a core airstream which flows into the compressor (11, 111).

5. A system according to claim 4, wherein a ratio of the mass flow of the bypass airstream to the core airstream is between 10 and 18.

6. A system according to any of claims 2 to 5, wherein the first propulsor (5, 110) is coupled to the turbine (13, 113).

7. A system according to any of the preceding claims, wherein the electrical energy storage unit comprises a chemical battery (9, 109).

8. A system according to claim 7, wherein the chemical battery (9, 109) has an energy density of between 500 and 1000 Watt hours per kilogram.

9. A system according to any of the preceding claims, wherein one or both of the electrical generator (15, 115) and the electrical motor (15, 115, 120) comprises a torque density of between 10 and 18 Newton metres per kilogram.

10. An aircraft comprising the propulsion system of any of the preceding claims.
